# EUROPEAN PATENT APPLICATION

(11) **EP 4 343 333 A1**
(43) Date of publication of application: **27.03.2024**
(21) Application number: 22804479.8
(22) Date of filing: 14.04.2022
(51) Int. Cl.: G01N 35/00

(54) **AUTOMATIC ANALYSIS DEVICE**

(30) Priority: 21.05.2021 JP 2021085931
(71) Applicant: HITACHI HIGH-TECH CORPORATION, Tokyo 105-6409 (JP)
(72) Inventor: FUKUMURA Mami, Tokyo 100-8280 (JP); KAWAHARA Tetsuji, Tokyo 105-6409 (JP); TAKAHASHI Takuya, Tokyo 105-6409 (JP)
(74) Representative: MERH-IP Matias Erny Reichl Hoffmann Patentanwälte PartG mbB
(86) International application number: PCT/JP2022/017869
(87) International publication number: WO 2022/244565

(57) **Abstract**

Provided is an automatic analysis device capable of detecting an abnormality in pipes of two or more systems while avoiding a drop in abnormality detection accuracy, an increase in data volume, an increase in device size, and higher costs. The automatic analysis device has an A-system 35 and a B-system 36 which are mutually independent. The A-system 35 and the B-system 36 individually include an A-side two-way solenoid valve 101 and a B-side two-way solenoid valve 102 such that aspiration states are individually controlled. A determination part 103 detects an abnormality of the automatic analysis device by comparing pressure measurement values in the aspiration that pertain to the A-system 35 and the B-system 36, based on pressure measurement values of a reagent probe cleaning tank-side vacuum tank 87 measured by a reagent probe cleaning tank-side pressure sensor 71.

## Description

### Technical Field

The present invention relates to an automatic analysis device.

### Background Art

An automatic analysis device including a vacuum aspiration device for vacuum-aspirating a post-analysis reaction liquid from a reaction vessel is disclosed in Patent Literature 1. Patent Literature 1 discloses "an automatic analysis device, comprising: a vacuum pump; a vacuum tank connected to the vacuum pump; a vacuum bin connected to the vacuum tank; a unit having a plurality of aspiration nozzles for aspirating liquid from a plurality of reaction vessels and connected to the vacuum bin; and, between the vacuum pump and the vacuum tank, a pressure adjustment mechanism that adjusts the aspiration pressure of the aspiration nozzle". Patent Literature 1 also indicates that "in a case where the automatic analysis device is installed in an environment with a different external atmospheric pressure, the performance of the vacuum pump deteriorates".

Patent Literature 2 discloses a flow system internal pressure control system for biochemical automatic analysis device capable of measuring a flow system pressure for biochemical automatic analysis device and of outputting an alarm signal and an alarm type according to a pressure value. Patent Literature 2 indicates that "in a case where the check valve remains closed, same is determined to be abnormal because the pressure is much lower than a lower-limit threshold value at the time of pressure measurement"; "in a case where the check valve is not closed, it is determined that the check valve is abnormal because the pressure is below the lower-limit threshold value at the time of pressure measurement"; and "in a case where the solenoid valve remains closed, it is determined that the solenoid valve is abnormal because the pressure in the flow path exceeds an upper-limit threshold value in the cleaning water discharge mode".

### Citation List

### Patent Literature

PTL 1: JP 2018-159682 A
PTL 2: JP 2010-217147 A

### Summary of Invention

### Technical Problem

The vacuum pump mounted in the vacuum aspiration device disclosed in Patent Literature 1 is subject to performance variations in a case where the air pressure changes, and thus there is a day-to-day difference in performance. Therefore, in a case where an abnormality in the vacuum aspiration device, such as an opening/closing failure of the solenoid valve, a pipe blockage, or a pipe breakage, is to be detected from the vacuum tank pressure, it is difficult to determine whether the abnormality is caused by a day-to-day difference in the vacuum pump or by an abnormality, and there is a problem that there is a drop in abnormality detection accuracy.

Patent Literature 2 discloses a flow system internal pressure control system for biochemical automatic analysis device capable of measuring pressure and of outputting an alarm signal and an alarm type according to a pressure value. The pressure control system disclosed in Patent Literature 2 sets an upper-limit threshold value and a lower-limit threshold value for pressure, and determines that the check valve or the solenoid valve is abnormal in a case where the pressure is higher than the upper-limit threshold value and in a case where the pressure is lower than the lower-limit threshold value.

In a case where an abnormality in the vacuum aspiration flow path is detected by setting threshold values in this manner, the threshold values need to be widely set by taking into account fluctuations in pressure due to a day-to-day differences or individual differences in vacuum pumps. For example, in a case where the average pressure of the vacuum pump during normal operation is -50 kPa and the day-to-day difference is ± 3 kPa, the pressure during normal operation is between -53 kPa (= -50 kPa - 3 kPa) and -47 kPa (= -50 kPa + 3 kPa).

When it is assumed that there is a pressure fluctuation of ± 2 kPa or more at abnormal times, the lower-limit threshold value is the minimum pressure in normal operation, that is, -55 kPa (= -53 kPa - 2 kPa), and the upper limit threshold value is -45 kPa (= -47 kPa + 2 kPa). Here, in a case where the pressure during normal operation is -53 kPa and there is a pressure fluctuation of +2 kPa due to an abnormality, the actual pressure is -51 kPa(= -53 kPa + 2 kPa), but this is within the threshold values (-55 kPa to -45 kPa) and is not determined to be abnormal.

As described above, there is a problem that there is a drop in abnormality detection accuracy due to threshold-value setting that takes into account day-to-day differences in the pump.

Furthermore, in the pressure control system disclosed in Patent Literature 2, the pressure throughout the entire time zone is acquired. For this reason, in the case of a large device having a plurality of other mechanisms and sensors and for which a plurality of measurement values must be acquired, there is a problem that the data volume increases as a result of acquiring the pressure throughout the entire time zone.

Further, the pressure control system disclosed in Patent Literature 2 detects an abnormality of only a cleaning water supply pipe of a sample pipetting device, that is, only one system. For this reason, in a case where abnormalities of a second and a third system, that is, abnormalities of pipes of a plurality of systems are to be detected in addition to the cleaning water supply pipe, it is necessary to install a pressure sensor for each system, which causes problems such as a larger device and higher costs. Furthermore, because data is also acquired from a second pressure sensor, there is also the problem of a larger data volume.

An object of the present invention is to provide an automatic analysis device capable of detecting an abnormality in pipes of two or more systems while avoiding a drop in abnormality detection accuracy, an increase in data volume, an increase in device size, and higher costs.

### Solution to Problem

An example of an automatic analysis device according to the present invention is an automatic analysis device including:
a first vacuum pump;
a first vacuum tank connected to the first vacuum pump;
a first pressure sensor installed in the first vacuum tank;
a first vacuum bin connected to the first vacuum tank;
a plurality of first aspiration solenoid valves;
a control part; and
a determination part,
in which
the first vacuum tank aspirates liquid in a plurality of reaction vessels or cleaning tanks, the reaction vessels or the cleaning tanks each containing liquid,
the plurality of first aspiration solenoid valves are all installed between the first vacuum tank and the first vacuum bin, and are opened and closed to adjust an aspiration pressure when the first vacuum tank aspirates liquid,
the control part controls the opening and closing of each of the first aspiration solenoid valves,
the automatic analysis device includes a plurality of independent aspiration systems,
each of the aspiration systems individually includes the first aspiration solenoid valve such that aspiration states are individually controlled, and
the determination part detects an abnormality of the automatic analysis device by comparing pressure measurement values in the aspiration that pertain to the respective aspiration systems, based on pressure measurement values of the first vacuum tank which are measured by the first pressure sensor.

The present specification includes the disclosures of JP 2021-085931 A upon which the priority of the present application is based.

### Advantageous Effects of Invention

According to the present invention, it is possible to provide an automatic analysis device capable of detecting an abnormality without a reduction in accuracy even in a case where there is a day-to-day difference or an individual difference in pump performance.

It is also possible to provide an automatic analysis device capable of suppressing an increase in data volume and of detecting an abnormality even in a large device having a plurality of other mechanisms and sensors and for which a plurality of measurement values must be acquired.

Furthermore, it is possible to provide an automatic analysis device capable of detecting an abnormality while suppressing an increase in device size, higher costs, and an increase in data volume even in a case of detecting an abnormality in pipes of a plurality of systems.

Problems, configurations, advantageous effects, and the like other than those described above will be clarified by the following descriptions of the embodiments.

### Brief Description of Drawings

[FIG. 1] FIG. 1 is a schematic view of an automatic analysis device according to a first embodiment of the present invention.
[FIG. 2] FIG. 2 is a schematic configuration diagram of a reagent probe cleaning tank-side aspiration unit according to the first embodiment of the present invention.
[FIG. 3] FIG. 3 is a schematic configuration diagram of a reagent probe cleaning tank-side aspiration unit and a reaction vessel-side aspiration unit according to the first embodiment of the present invention.
[FIG. 4] FIG. 4 is a diagram showing operation of each solenoid valve according to the first embodiment of the present invention.
[FIG. 5A] FIG. 5A is a diagram (normal time) showing pressure fluctuations in a vacuum tank in a case where the solenoid valve operation shown in FIG. 4 is performed.
[FIG. 5B] FIG. 5B is a diagram (normal time) in which the maximum value of each cycle is extracted from the pressure fluctuations of the vacuum tank shown in FIG. 4.
[FIG. 6A] FIG. 6A is a diagram showing pressure fluctuations in the reagent probe cleaning tank-side vacuum tank in a case where the solenoid valve operation shown in FIG. 4 is performed (at time of abnormality in solenoid valve closing).
[FIG. 6B] FIG. 6B is a diagram (at time of abnormality in solenoid valve closing) in which the maximum value of each cycle is extracted from the pressure fluctuations of the reagent probe cleaning tank-side vacuum tank shown in FIG. 6A.
[FIG. 7] FIG. 7 is a flowchart of abnormality detection according to the first embodiment of the present invention.
[FIG. 8A] FIG. 8A is a diagram (at time of abnormality in solenoid valve opening) showing pressure fluctuations in the reagent probe cleaning tank-side vacuum tank in a case where the solenoid valve operation shown in FIG. 4 is performed.
[FIG. 8B] FIG. 8B is a diagram (at time of abnormality in solenoid valve opening) in which the maximum value of each cycle is extracted from the pressure fluctuations of the reagent probe cleaning tank-side vacuum tank shown in FIG. 8A.
[FIG. 9A] FIG. 9A is a diagram (when the flow path is blocked) showing pressure fluctuations in the reagent probe cleaning tank-side vacuum tank in a case where the solenoid valve operation shown in FIG. 4 is performed.
[FIG. 9B] FIG. 9B is a diagram (when the flow path is blocked) in which the maximum value of each cycle is extracted from the pressure fluctuations of the reagent probe cleaning tank-side vacuum tank shown in FIG. 9A.
[FIG. 10A] FIG. 10A is a diagram (at the time of a flow path leak) showing pressure fluctuations in the reagent probe cleaning tank-side vacuum tank in a case where the solenoid valve operation shown in FIG. 4 is performed.
[FIG. 10B] FIG. 10B is a diagram (at the time of a flow path leak) in which the maximum value of each cycle is extracted from the pressure fluctuations of the reagent probe cleaning tank-side vacuum tank shown in FIG. 10A.
[FIG. 11] FIG. 11 is a schematic configuration diagram of a reagent probe cleaning tank-side aspiration unit, a reaction vessel-side aspiration unit, and a liquid supply unit according to a second embodiment of the present invention.
[FIG. 12A] FIG. 12A is a diagram (at time of a liquid supply abnormality) showing pressure fluctuations in the reagent probe cleaning tank-side vacuum tank in a case where the solenoid valve operation shown in FIG. 4 is performed.
[FIG. 12B] FIG. 12B is a diagram (at the time of liquid supply abnormality) in which the maximum value of each cycle is extracted from the pressure fluctuations in the reagent probe cleaning tank-side vacuum tank shown in FIG. 12A.
[FIG. 13] FIG. 13 is a flowchart of abnormality detection according to the second embodiment of the present invention.
[FIG. 14] FIG. 14 is a view showing operations of a water supply two-way solenoid valve and a reaction vessel-side three-way solenoid valve according to a third embodiment of the present invention.
[FIG. 15A] FIG. 15A is a diagram (normal time) showing pressure fluctuations in a reaction vessel-side vacuum tank in a case where the solenoid valve operation shown in FIG. 14 is performed.
[FIG. 15B] FIG. 15B is a diagram (normal time) in which the maximum value of each cycle is extracted from the pressure fluctuations of the reaction vessel-side vacuum tank shown in FIG. 14.
[FIG. 16A] FIG. 16A is a diagram (at time of water supply abnormality) showing pressure fluctuations in the reaction vessel-side vacuum tank in a case where the solenoid valve operation shown in FIG. 14 is performed.
[FIG. 16B] FIG. 16B is a diagram (at time of water supply abnormality) in which the maximum value of each cycle is extracted from the pressure fluctuations of the reaction vessel-side vacuum tank shown in FIG. 16A.
[FIG. 17] FIG. 17 is a flowchart of abnormality detection according to the third embodiment of the present invention.

### Description of Embodiments

Hereinafter, embodiments will be described with reference to the drawings.

### First Embodiment

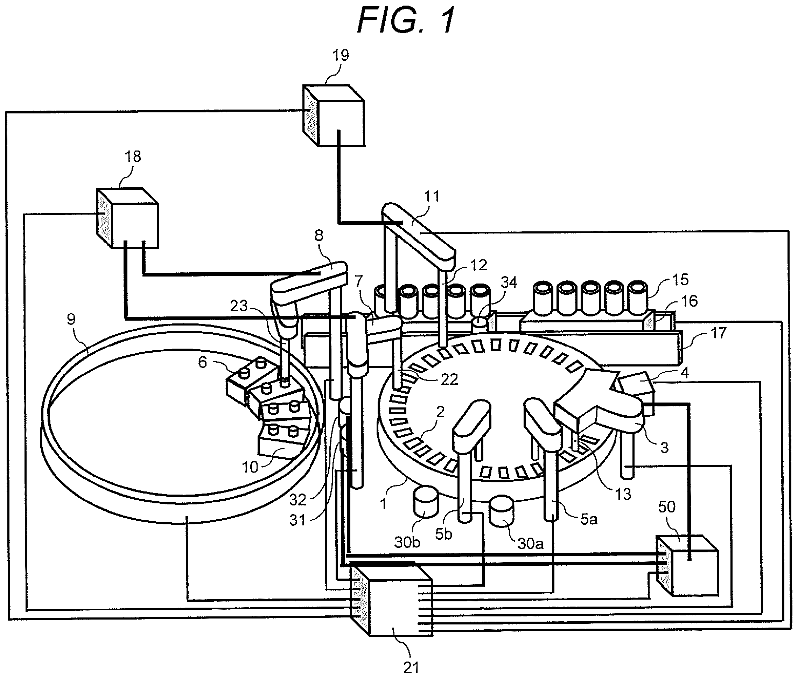

Hereinafter, an embodiment of the present invention will be described with reference to FIGS. 1 to 10B.

FIG. 1 is a schematic view of an automatic analysis device according to a first embodiment. The configuration of the automatic analysis device is not limited to that shown in FIG. 1, rather, the present invention can be applied to a general automatic analysis device, for example.

In FIG. 1, reaction vessels 2 are arranged side by side on the circumference of a reaction disk 1. A plurality of reagent bottles 10 is arranged on the circumference of a reagent disk 9. Detergent bottles 6 can also be arranged inside the reagent disk 9. In addition, a sample transport mechanism 17 that moves a rack 16 whereon sample vessels 15 are placed is installed near the reaction disk 1.

Between the reaction disk 1 and the reagent disk 9, an A-side reagent pipetting mechanism 7 and a B-side reagent pipetting mechanism 8 capable of rotating and moving up and down are installed, and an A-side reagent probe 22 and a B-side reagent probe 23 are respectively provided thereto. The A-side reagent probe 22 and the B-side reagent probe 23 are moved up and down and horizontally by the A-side reagent pipetting mechanism 7 and the B-side reagent pipetting mechanism 8, respectively.

A reagent syringe 18 is connected to each of the A-side reagent probe 22 and the B-side reagent probe 23. In response to the operation of the reagent syringe 18, aspiration and discharge of the reagent by the A-side reagent probe 22 and the B-side reagent probe 23 are performed. The reagent syringe 18 aspirates and discharges detergent from the detergent bottles 6 to clean the insides of the A-side reagent probe 22 and the B-side reagent probe 23.

A sample pipetting mechanism 11 capable of rotating and moving up and down is installed between the reaction disk 1 and the sample transport mechanism 17, and includes a sample probe 12. A sample syringe 19 is connected to the sample probe 12. The sample probe 12 moves horizontally while tracing an arc around an axis of rotation and moves up and down to perform pipetting of a sample from the sample vessel 15 to the reaction vessels 2.

A cleaning mechanism 3, a spectrophotometer 4, stirring mechanisms 5a and 5b, the reagent disk 9, and the sample transport mechanism 17 are arranged around the reaction disk 1. The spectrophotometer 4 receives light emitted from a light source (not illustrated).

The cleaning mechanism 3 cleans the reaction vessels 2 by aspirating and discharging cleaning solution into the reaction vessels 2.

Stirring mechanism cleaning tanks 30a and 30b are arranged within the operating ranges of the stirring mechanisms 5a and 5b. In addition, an A-side reagent probe cleaning tank 31 and a B-side reagent probe cleaning tank 32 are arranged within the operating ranges of the A-side reagent probe 22 and the B-side reagent probe 23. Further, a sample probe cleaning tank 34 is arranged within the operating range of the sample probe 12.

Here, a sample analysis method will be described. A sample vessel 15 containing a test sample such as blood is placed on the rack 16 and carried by the sample transport mechanism 17. A sample to be inspected is pipetted from the sample vessel 15 to the reaction vessels 2 by the sample probe 12. In addition, the reagent is pipetted from the reagent bottle 10 into the reaction vessels 2 by the A-side reagent probe 22 and the B-side reagent probe 23. In the reaction vessel 2, the sample and the reagent are stirred by the stirring mechanisms 5a and 5b, the mixed solution is irradiated with light emitted from a light source, and the irradiated light is received by the spectrophotometer 4. Based on the amount of light received, the controller 21 calculates the concentration of a predetermined component contained in the sample.

A vacuum aspiration device 50 is connected to the cleaning mechanism 3, the A-side reagent probe cleaning tank 31, and the B-side reagent probe cleaning tank 32. Analyzed reaction liquid remaining in the reaction vessels 2 is aspirated from the cleaning mechanism 3. In addition, cleaning water obtained by cleaning the outer walls of the A-side reagent probe 22 and the B-side reagent probe 23 is aspirated from the A-side reagent probe cleaning tank 31 and the B-side reagent probe cleaning tank 32.

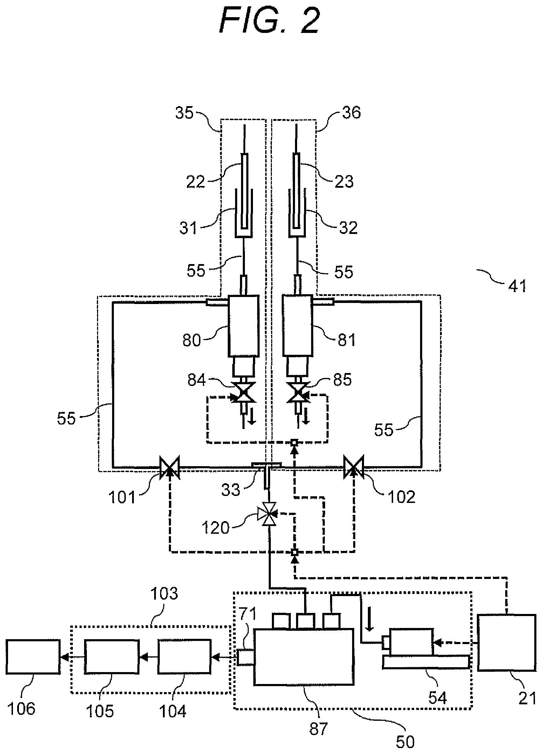

FIG. 2 is a diagram schematically illustrating a reagent probe cleaning tank-side aspiration unit 41 (first aspiration unit) in the automatic analysis device. The reagent probe cleaning tank-side aspiration unit 41 has a plurality of independent aspiration systems. In the present embodiment, the plurality of independent aspiration systems includes an A-system 35 and a B-system 36. The A-system 35 and the B-system 36 each have an individual solenoid valve (two-way solenoid valve in the present embodiment), and hence aspiration states are individually controlled.

The A-system 35 includes an A-side reagent probe cleaning tank 31, an A-side waste liquid bin 80 (first vacuum bin) as a vacuum bin, and an A-side two-way solenoid valve 101 (first aspiration solenoid valve). The A-side reagent probe cleaning tank 31 and the A-side waste liquid bin 80 are connected by a tube 55, and the A-side waste liquid bin 80 and the A-side two-way solenoid valve 101 are also connected by a tube 55.

The B-system 36 includes a B-side reagent probe cleaning tank 32, a B-side waste liquid bin 81 (first vacuum bin) as a vacuum bin, and a B-side two-way solenoid valve 102 (first aspiration solenoid valve). The B-side reagent probe cleaning tank 32 and the B-side waste liquid bin 81 are connected by a tube 55, and the B-side waste liquid bin 81 and the B-side two-way solenoid valve 102 are also connected by a tube 55.

In the A-system 35 and the B-system 36, the tubes 55 connecting the parts as described above can have the same structure. In this case, the A-system 35 and the B-system 36 have the same or a similar pressure loss during vacuum aspiration.

The A-system 35 and the B-system 36 merge at a three-way junction 33, and are connected to a reagent probe cleaning tank-side vacuum tank 87 (first vacuum tank) via a reagent probe cleaning tank-side three-way solenoid valve 120. The reagent probe cleaning tank-side vacuum tank 87 is connected to the reagent probe cleaning tank-side vacuum pump 54 (first vacuum pump). The reagent probe cleaning tank-side vacuum tank 87 is always in a low pressure state due to the reagent probe cleaning tank-side vacuum pump 54.

A reagent probe cleaning tank-side pressure sensor 71 (first pressure sensor) is installed in the reagent probe cleaning tank-side vacuum tank 87, and measures the pressure in the reagent probe cleaning tank-side vacuum tank 87.

As described above, the automatic analysis device according to the present embodiment includes the reagent probe cleaning tank-side vacuum pump 54, the reagent probe cleaning tank-side vacuum tank 87 connected to the reagent probe cleaning tank-side vacuum pump 54, the reagent probe cleaning tank-side pressure sensor 71 installed in the reagent probe cleaning tank-side vacuum tank 87, the A-side waste liquid bin 80 and the B-side waste liquid bin 81 that are connected to the reagent probe cleaning tank-side vacuum tank 87, and the A-side two-way solenoid valve 101 and the B-side two-way solenoid valve 102.

The cleaning solution in the A-side reagent probe cleaning tank 31 is aspirated using the vacuum pressure from the reagent probe cleaning tank-side vacuum tank 87 when the reagent probe cleaning tank-side three-way solenoid valve 120 and the A-side two-way solenoid valve 101 are simultaneously open. Similarly, when the reagent probe cleaning tank-side three-way solenoid valve 120 and the B-side two-way solenoid valve 102 are simultaneously open, the cleaning solution in the B-side reagent probe cleaning tank 32 is aspirated using the vacuum pressure by the reagent probe cleaning tank-side vacuum tank 87.

As described above, the reagent probe cleaning tank-side vacuum tank 87 aspirates liquid in the A-side reagent probe cleaning tank 31 and in the B-side reagent probe cleaning tank 32 that each contain the liquid.

The A-side two-way solenoid valve 101 is installed between the reagent probe cleaning tank-side vacuum tank 87 and the A-side waste liquid bin 80, and is opened and closed to adjust the aspiration pressure when the reagent probe cleaning tank-side vacuum tank 87 aspirates liquid. Similarly, the B-side two-way solenoid valve 102 is installed between the reagent probe cleaning tank-side vacuum tank 87 and the B-side waste liquid bin 81, and is opened and closed to adjust aspiration pressure when the reagent probe cleaning tank-side vacuum tank 87 aspirates liquid.

The A-side waste liquid bin 80 and the B-side waste liquid bin 81 are vessels for storing the aspirated cleaning solution. That is, the A-side waste liquid bin 80 and the B-side waste liquid bin 81 fulfill the role of preventing liquid from entering into the reagent probe cleaning tank-side vacuum tank 87.

It is also possible to discharge liquid from the A-side waste liquid bin 80 and the B-side waste liquid bin 81 via a two-way solenoid valve 84 for the A-side waste liquid and a two-way solenoid valve 85 for the B-side waste liquid, respectively.

The automatic analysis device includes a controller 21. The controller 21 is configured by a computer, for example. The computer has, for example, a known hardware configuration serving as a computer, and includes a calculation means and a storage means, for example. The calculation means includes, for example, a processor, and the storage means includes, for example, a storage medium such as a semiconductor memory device and a magnetic disk device. The storage means may store a program. As a result of the processor executing this program, the computer may perform the functions described in this embodiment.

The controller 21 is connected to each mechanism of the automatic analysis device and controls the operation of the automatic analysis device. The controller 21 functions as a control part.

A signal outputted from the reagent probe cleaning tank-side pressure sensor 71 is inputted to a determination part 103. The determination part 103 includes a sampling part 104 and a storage part 105. The determination part 103 outputs information to a display part 106.

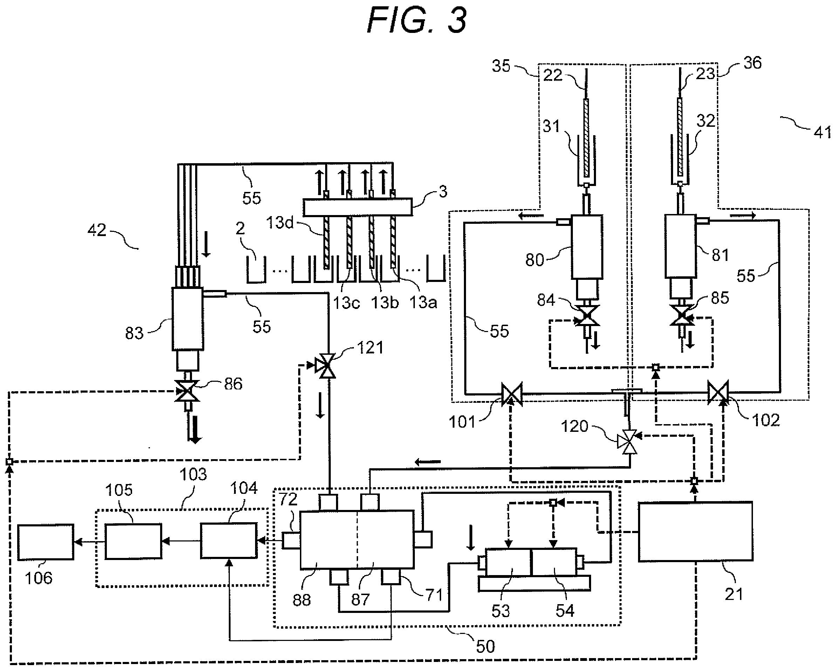

FIG. 3 is a diagram showing a reagent probe cleaning tank-side aspiration unit 41 (first aspiration unit) and a reaction vessel-side aspiration unit 42 (second aspiration unit) of FIG. 2 in the automatic analysis device.

As described above, the reagent probe cleaning tank-side aspiration unit 41 is connected to the reagent probe cleaning tank-side vacuum pump 54 and the reagent probe cleaning tank-side vacuum tank 87. The reaction vessel-side aspiration unit 42 is connected to a reaction vessel-side vacuum pump 53 (second vacuum pump) and a reaction vessel-side vacuum tank 88 (second vacuum tank). As described above, by individually including a vacuum pump and a vacuum tank in each aspiration unit, vacuum aspiration can be performed mutually independently.

Here, as the reagent probe cleaning tank-side vacuum pump 54 and the reaction vessel-side vacuum pump 53, vacuum pumps having different configurations can be used, and one parallel vacuum pump obtained by arranging vacuum pumps having different configurations in parallel may be used. Further, vacuum pumps having the same configuration may be used, or one parallel vacuum pump obtained by arranging vacuum pumps having the same configuration in parallel may be used.

The reagent probe cleaning tank-side vacuum tank 87 and the reaction vessel-side vacuum tank 88 may be vacuum tanks having different shapes, or may be vacuum tanks having the same shape. In addition, a partition may be provided in one vacuum tank to divide same into two and enable same to function as two vacuum tanks.

The reaction vessel-side aspiration unit 42 includes reaction vessels 2, a cleaning mechanism 3, and aspiration nozzles 13a, 13b, 13c, and 13d (a single aspiration nozzle 13 is shown in FIG. 1). The aspiration nozzles 13a, 13b, 13c, and 13d included in the cleaning mechanism 3 are connected, via the tubes 55, to the reaction vessel-side waste liquid bin 83 (second vacuum bin), which is a vacuum bin, the reaction vessel-side three-way solenoid valve 121 (second aspiration solenoid valve), the reaction vessel-side vacuum tank 88, and the reaction vessel-side vacuum pump 53.

By opening the reaction vessel-side three-way solenoid valve 121 at the timing for aspirating the analyzed reaction liquid, the vacuum pressure due to the reaction vessel-side vacuum tank 88 is used and the analyzed reaction liquid is aspirated from the reaction vessels 2. Meanwhile, the reaction vessel-side waste liquid bin 83 is a vessel for storing the analyzed reaction liquid thus aspirated. That is, the reaction vessel-side waste liquid bin 83 fulfills the role of preventing the analyzed reaction liquid from entering into the reaction vessel-side vacuum tank 88.

It is also possible to discharge the liquid from the reaction vessel-side waste liquid bin 83 via a reaction vessel-side waste liquid two-way solenoid valve 86.

A reaction vessel-side pressure sensor 72 (second pressure sensor) is installed in the reaction vessel-side vacuum tank 88, and measures the pressure in the reaction vessel-side vacuum tank 88. A signal outputted from the reaction vessel-side pressure sensor 72 is inputted to the determination part 103.

As described above, the automatic analysis device according to the present embodiment includes the reaction vessel-side vacuum pump 53, the reaction vessel-side vacuum tank 88 connected to the reaction vessel-side vacuum pump 53, the reaction vessel-side pressure sensor 72 installed in the reaction vessel-side vacuum tank 88, the reaction vessel-side waste liquid bin 83 connected to the reaction vessel-side vacuum tank 88, and the reaction vessel-side three-way solenoid valve 121.

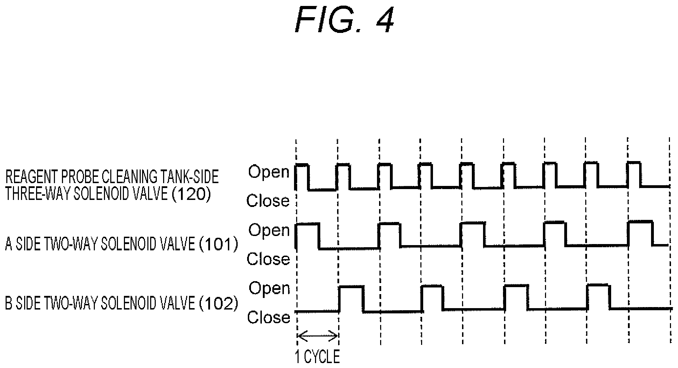

FIG. 4 illustrates opening and closing operations of the reagent probe cleaning tank-side three-way solenoid valve 120, the A-side two-way solenoid valve 101, and the B-side two-way solenoid valve 102.

The cleaning water in the A-side reagent probe cleaning tank 31 is aspirated when the reagent probe cleaning tank-side three-way solenoid valve 120 and the A-side two-way solenoid valve 101 are simultaneously open. Similarly, the cleaning water in the B-side reagent probe cleaning tank 32 is aspirated when the reagent probe cleaning tank-side three-way solenoid valve 120 and the B-side two-way solenoid valve 102 are simultaneously open.

In FIG. 4, cycle switching is indicated by broken lines. The reagent probe cleaning tank-side three-way solenoid valve 120 opens once per cycle. On the other hand, the A-side two-way solenoid valve 101 and the B-side two-way solenoid valve 102 open once every 2 cycles, with alternate opening timings. In a partial period of a certain cycle, both the reagent probe cleaning tank-side three-way solenoid valve 120 and the A-side two-way solenoid valve 101 are open, and in another period of the cycle, one or both are closed. In a partial period of the next cycle, both the reagent probe cleaning tank-side three-way solenoid valve 120 and the B-side two-way solenoid valve 102 are open, and in another period of the cycle, one or both are closed. In this manner, the cleaning solution is alternately aspirated in the A-side reagent probe cleaning tank 31 and the cleaning tank 32 for the B-side reagent probe once every 2 cycles.

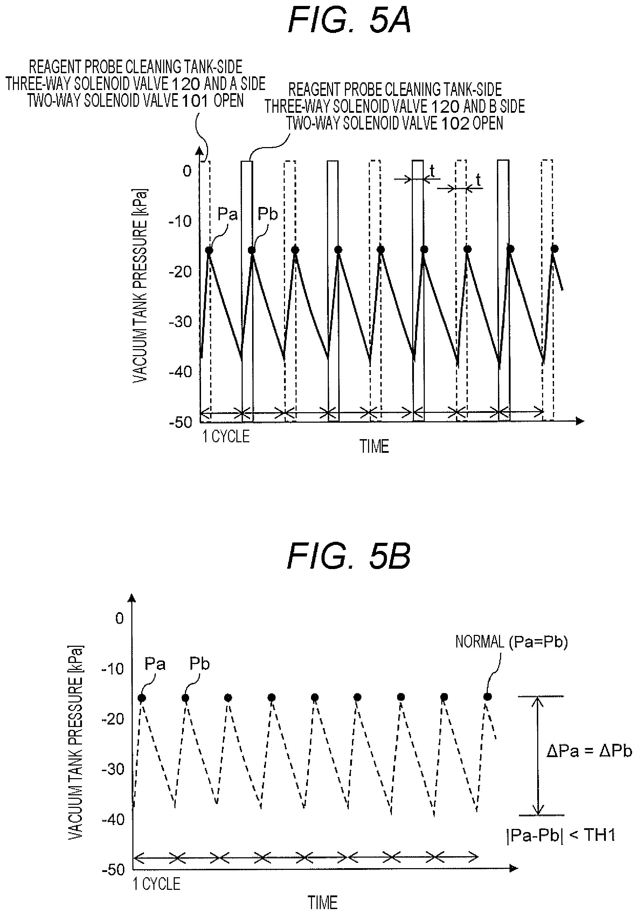

FIG. 5A shows pressure fluctuations in the reagent probe cleaning tank-side vacuum tank 87 in a case where the solenoid valve operation shown in FIG. 4 is performed and the cleaning solution aspiration of the A-side reagent probe cleaning tank 31 and the B-side reagent probe cleaning tank 32 is performed normally. The horizontal axis represents time, and the vertical axis represents relative pressure with atmospheric pressure set to 0.

In FIG. 5A, the timing at which the cleaning solution in the A-side reagent probe cleaning tank 31 is aspirated by opening both the reagent probe cleaning tank-side three-way solenoid valve 120 and the A-side two-way solenoid valve 101 is indicated by broken lines, and the timing at which the cleaning solution in the B-side reagent probe cleaning tank 32 is aspirated by opening both the reagent probe cleaning tank-side three-way solenoid valve 120 and the B-side two-way solenoid valve 102 is indicated by solid lines.

As shown in FIG. 5A, the pressure drops in the sections other than the sections indicated by the broken line and the solid line, and the pressure rises in the sections indicated by the broken line and the solid line.

Except for the sections indicated by the broken line and the solid line, the reagent probe cleaning tank-side three-way solenoid valve 120 is closed, or both the A-side two-way solenoid valve 101 and the B-side two-way solenoid valve 102 are closed. Therefore, the A-side reagent probe cleaning tank 31 or the B-side reagent probe cleaning tank 32 and the reagent probe cleaning tank-side vacuum tank 87 do not communicate with each other. At this time, because the reagent probe cleaning tank-side vacuum pump 54 aspirates the reagent probe cleaning tank-side vacuum tank 87, the pressure of the reagent probe cleaning tank-side vacuum tank 87 drops. Therefore, the pressure is minimum at the end of these sections (that is, at the start of the broken-line sections and the start of the solid-line sections).

Sections indicated by broken lines and solid lines are sections in which the reagent probe cleaning tank-side three-way solenoid valve 120 and the A-side two-way solenoid valve 101 or the B-side two-way solenoid valve 102 are open. Therefore, the A-side reagent probe cleaning tank 31 or the B-side reagent probe cleaning tank 32 communicates with the reagent probe cleaning tank-side vacuum tank 87 via pipings.

In these sections, air flows from the A-side reagent probe cleaning tank 31 or the B-side reagent probe cleaning tank 32 at a pressure higher than that of the reagent probe cleaning tank-side vacuum tank 87 to the reagent probe cleaning tank-side vacuum tank 87 at a lower pressure. That is, the cleaning water in the A-side reagent probe cleaning tank 31 or the B-side reagent probe cleaning tank 32 is aspirated into pipings. At this time, the pressure of the reagent probe cleaning tank-side vacuum tank 87 rises. Therefore, the pressure is maximized at the end of the broken-line and solid-line sections.

In a case where the A-system 35 and the B-system 36 have the same structure, the pressure rise values in the broken-line sections and the solid-line sections are substantially the same. In addition, the pressure drop values in the sections other than the broken-line sections and the solid-line sections are about the same.

FIG. 5B is a graph obtained by extracting the maximum value for each cycle in FIG. 5A. As shown in FIG. 5B, the maximum pressure of the reagent probe cleaning tank-side vacuum tank 87 indicates substantially the same value for each cycle. That is, the pressure Pa at the moment when the aspiration of the A-system 35 is ended is constant or substantially constant regardless of the cycle, and the pressure Pb at the moment when the aspiration of the B-system 36 is ended is also constant or substantially constant regardless of the cycle.

The fluctuation range of the pressure measurement value due to the operation of the A-side two-way solenoid valve 101 in the A-system 35 (that is, the difference between the maximum value and the minimum value) is defined as ΔPa. Further, the fluctuation range of the pressure measurement value due to the operation of the B-side two-way solenoid valve 102 in the B-system 36 (that is, the difference between the maximum value and the minimum value) is defined as ΔPb. The difference between these fluctuation ranges, that is, ΔPa - ΔPb (strictly, the absolute value of the difference) is 0 in the example of FIG. 5B, and is equal to or less than a predetermined threshold value TH1 (first threshold value) at a normal time.

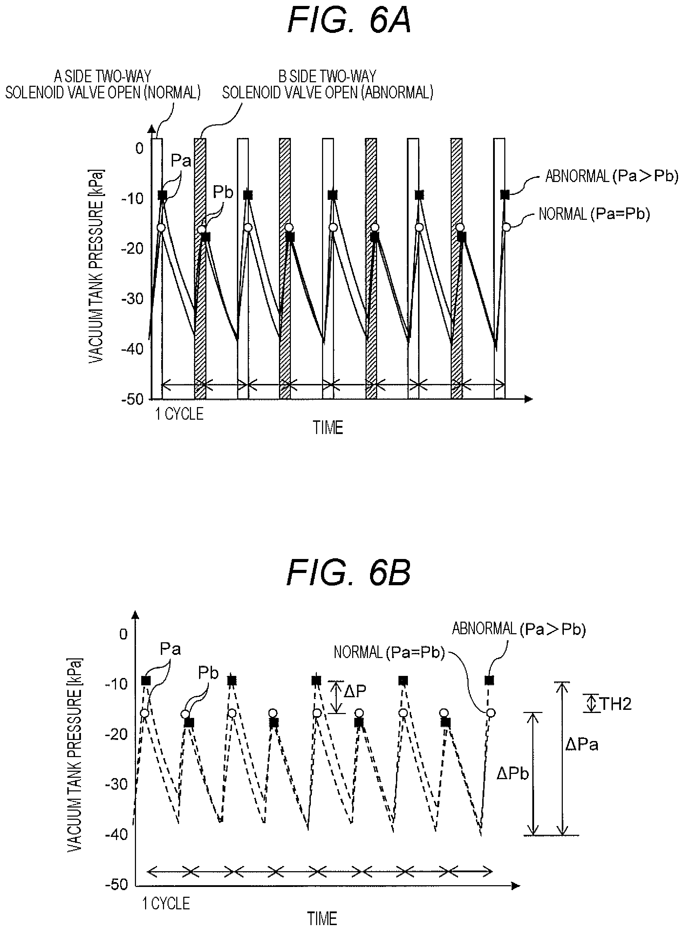

FIG. 6A shows the pressure fluctuations in the reagent probe cleaning tank-side vacuum tank 87 in a case where an abnormality where the B-side two-way solenoid valve 102 does not close has occurred, and FIG. 6B shows a graph obtained by extracting the maximum value of each cycle of FIG. 6A.

FIGS. 6A and 6B illustrate pressure fluctuations during normal times (white circles) in addition to abnormal times (black squares). As shown in FIGS. 6A and 6B, at normal times (white circles), equal pressure fluctuations are shown in all cycles, and Pa=Pb holds true. However, at abnormal times (black squares), Pa > Pb holds true.

The reason for this is that the fact that the B-side two-way solenoid valve 102 is not closed means that the B-side two-way solenoid valve 102 is always open. That is, at the timing when the A-side two-way solenoid valve 101 opens, both the A-side two-way solenoid valve 101 and the B-side two-way solenoid valve 102 are open. Therefore, at the timing when the A-side two-way solenoid valve 101 opens, the cleaning solution is aspirated from both the A-side reagent probe cleaning tank 31 and the B-side reagent probe cleaning tank 32, and the pressure rise value increases.

On the other hand, at the timing when the B-side two-way solenoid valve 102 opens, only the B-side two-way solenoid valve 102 is open. Therefore, at the timing when the B-side two-way solenoid valve 102 opens, only the B-side reagent probe cleaning tank 32 is aspirated, and the pressure rise value is reduced.

Therefore, in a case where Pa > Pb, the possibility of an abnormality where the B-side two-way solenoid valve 102 is not closed can be predicted. Conversely, in a case where Pa < Pb, the possibility of an abnormality where the A-side two-way solenoid valve 101 is not closed can be predicted.

Further, in the A-system 35 and the B-system 36, the difference ΔPa-ΔPb of the fluctuation ranges of the pressure measurement value due to the operation of the A-side two-way solenoid valve 101 and the B-side two-way solenoid valve 102 is not 0. In a case where the difference is equal to or larger than a predetermined threshold value TH2 (second threshold value), the possibility of an abnormality of the automatic analysis device (for example, an abnormality of the A-system 35 or the B-system 36) can be predicted. By appropriately setting the first threshold value, an abnormality can be appropriately detected. Note that, in a case where three or more aspiration systems are present, the difference between the maximum value and the minimum value of the fluctuation ranges of the pressure measurement value can be used.

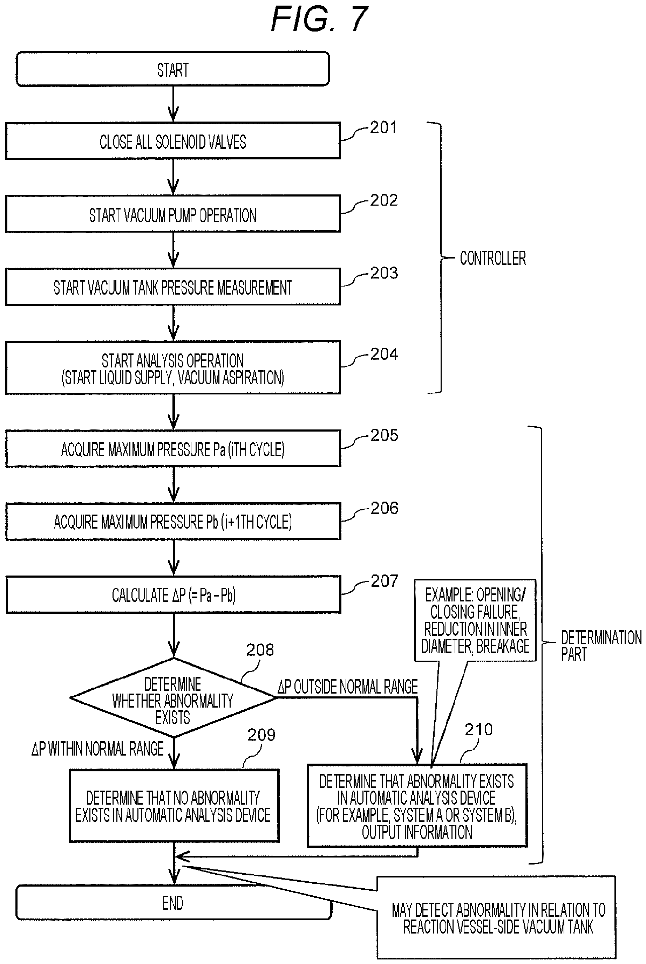

FIG. 7 is a chart of abnormality detection of the reagent probe cleaning tank-side aspiration unit 41. First, the controller 21 closes all of the reagent probe cleaning tank-side three-way solenoid valve 120, the A-side two-way solenoid valve 101, and the B-side two-way solenoid valve 102 (201).

Next, the controller 21 starts the operation of the reagent probe cleaning tank-side vacuum pump 54. At this time, because all the solenoid valves are closed, the pressure in the reagent probe cleaning tank-side vacuum tank 87 drops to a constant value (202).

Subsequently, the controller 21 starts measurement of the pressure in the reagent probe cleaning tank-side vacuum tank 87 (203).

Thereafter, the controller 21 starts an analysis operation (204). For example, the controller 21 controls opening and closing of the A-side two-way solenoid valve 101 and the B-side two-way solenoid valve 102. Accordingly, a cycle that includes the supplying of liquid to the A-side reagent probe cleaning tank 31 and the B-side reagent probe cleaning tank 32 and a vacuum aspiration operation is started. The pressure at this time changes, for example, as shown in FIG. 5A or FIG. 6A.

In the i-th cycle (where i is the number of the cycle), the determination part 103 acquires a maximum value Pa of the pressure measurement value in the cycle wherein the A-side two-way solenoid valve 101 opens (205). Subsequently, the determination part 103 acquires the maximum value Pb of the pressure measurement value in the cycle (that is, the (i+1)th cycle) wherein the B-side two-way solenoid valve 102 opens (206).

The determination part 103 calculates ΔP = Pa - Pb (207), and determines the presence or absence of an abnormality (208).

If ΔP falls within a preset normal value range, the determination part 103 determines that "there is no abnormality in the automatic analysis device" (209). For example, it is determined that there is no abnormality in the A-system 35 and the B-system 36. On the other hand, if ΔP is outside the normal value range, the determination part 103 determines that "there is an abnormality in the automatic analysis device" (210). For example, it is determined that there is an abnormality in the A-system 35 or the B-system 36.

In a case where an abnormality of the automatic analysis device is detected (210), the determination part 103 outputs information indicating that there is an abnormality in the automatic analysis device. For example, the determination part 103 outputs information indicating that an abnormality has possibly occurred due to an opening/closing failure of the A-side two-way solenoid valve 101 or the B-side two-way solenoid valve 102, a reduction in the inner diameter of a pipe in the automatic analysis device, or an abnormality due to cracking of a pipe in the automatic analysis device. The form of output can be arbitrarily designed, and is realized, for example, by displaying in a display device and/or storing in a storage medium. By outputting the information, the user of the automatic analysis device can be made aware of the possibility of an abnormality occurring.

As described above, the determination part 103 detects an abnormality in the automatic analysis device based on the pressure measurement value of the reagent probe cleaning tank-side vacuum tank 87 measured by the reagent probe cleaning tank-side pressure sensor 71. In particular, the determination part 103 detects the abnormality of the automatic analysis device by comparing the pressure measurement values in aspiration of the A-system 35 and the B-system 36.

In a case where a determination is made by the operation shown in FIG. 7, the determination part 103 may detect the abnormality of the automatic analysis device as the abnormality of any of the aspiration systems (for example, the A-system 35 or the B-system 36). In other words, in a case where an abnormality in the automatic analysis device is detected, the determination part 103 may output information indicating that an abnormality has possibly occurred in any of the aspiration systems. In this way, the user of the automatic analysis device is able to know in more detail the part of the device where the abnormality has occurred.

For example, in a case where the determination part 103 determines that there is an abnormality in the automatic analysis device, if Pa > Pb, the determination part 103 may output information indicating an abnormality has possibly occurred where the B-side two-way solenoid valve 102 does not close, and conversely, if Pa < Pb, the determination part 103 may output information indicating that an abnormality has possibly occurred where the A-side two-way solenoid valve 101 does not close.

In the present embodiment, the determination part 103 detects an abnormality based on the pressure measurement value during the analysis operation by the automatic analysis device. Therefore, the abnormality can be detected without stopping the analysis operation.

In the present embodiment, the determination part 103 detects an abnormality of the automatic analysis device (for example, a vacuum aspiration pipe) based on ΔP (= Pa - Pb). That is, an abnormality is determined based on the pressure values of the same pump on the same day. As described above, by detecting an abnormality based on ΔP calculated from consecutive cycles, it is possible to eliminate day-to-day differences and individual differences in pumps, and it is possible to detect an abnormality without a reduction in accuracy.

Note that factors affecting vacuum pump performance such as atmospheric pressure and temperature may be measured using a barometer, a thermometer, or the like, and day-to-day differences in the vacuum pump may be excluded from the measured values. In addition, individual differences between vacuum pumps may be grasped in advance, and thus the individual differences between vacuum pumps may be eliminated.

Day-to-day differences in the vacuum pump may be eliminated based on the pressure measurement values of the different aspiration units. For example, the state of the pump on a day may be grasped from the pressure measurement value of the reagent probe cleaning tank-side vacuum tank 87, and the pressure measurement value of the reaction vessel-side vacuum tank 88 may be corrected.

Furthermore, in the present embodiment, an abnormality is detected from a pressure measurement value at a specific time in each cycle (for example, a maximum value). That is, an abnormality can be detected by acquiring the pressure measurement data at least once per cycle. Therefore, an abnormality can be detected with a small data volume.

The pressure can be measured only by the reagent probe cleaning tank-side pressure sensor 71. That is, it is not necessary to install a pressure sensor for each system, and it is thus possible to miniaturize the device and reduce the cost thereof.

In a modification, the determination part 103 may determine that an abnormality of the automatic analysis device is not detected if the difference ΔPa - ΔPb of the fluctuation ranges of the pressure measurement value is equal to or less than the threshold value TH2. For example, it is determined that there is no abnormality in the A-system 35 and the B-system 36. On the other hand, the determination part 103 may determine that an abnormality of the automatic analysis device is detected in a case where ΔPa - ΔPb exceeds a threshold value TH2. For example, it is determined that there is an abnormality in the A-system 35 or the B-system 36. When the difference between the fluctuation ranges is used in this manner, it is possible to make a determination that takes into account both the maximum value and the minimum value.

In the first embodiment, the determination part 103 detects an abnormality in the automatic analysis device by comparing the pressure measurement values at times when the pressure in the reagent probe cleaning tank-side vacuum tank 87 is maximum. As a modification, the determination part 103 may detect the abnormality of the automatic analysis device by comparing the pressure measurement values at times when the pressure of the reagent probe cleaning tank-side vacuum tank 87 is minimum. When the maximum value or the minimum value is used, even if a slight temporal shift occurs in the cycle, the detection accuracy is not affected.

In another modification, the determination part 103 may detect an abnormality of the automatic analysis device by comparing the pressure measurement values at a predetermined time during operation cycles of the A-side two-way solenoid valve 101 and the B-side two-way solenoid valve 102. For example, as shown in FIG. 5A, a pressure measurement value at a time t during each cycle may be used. When the measured value at the predetermined time is used, an abnormality can be detected in a case where a temporal shift occurs in the cycle.

In the first embodiment (FIG. 7), the processing ends after step 209 or 210, but as a modification, the processing may be returned to step 205 after step 209 or 210. In this way, the determination is continuously performed in each cycle.

In the first embodiment, the determination part 103 detects an abnormality in relation to the reagent probe cleaning tank-side vacuum tank 87 (for example, based on a pressure measurement value thereof). In a modification, as shown in FIG. 7, after step 209 or 210, the determination part 103 may individually detect an abnormality of the automatic analysis device in association with the reaction vessel-side vacuum tank 88 (for example, based on the pressure measurement value thereof). As described above, by individually detecting an abnormality of the automatic analysis device in relation to the reagent probe cleaning tank-side vacuum tank 87 and the reaction vessel-side vacuum tank 88, the range within which an abnormality can be detected is extended.

Note that a method for detecting an abnormality in relation to the reaction vessel-side vacuum tank 88 can be designed, as appropriate, by those skilled in the art. For example, a known abnormality detection method may be used. In addition, for example, an individual aspiration system may be provided between each of the aspiration nozzles 13a, 13b, 13c, and 13d and the reaction vessel-side vacuum tank 88, and a plurality of aspiration systems such as the reagent probe cleaning tank-side aspiration unit 41 of the first embodiment may be provided. In that case, the same abnormality detection method as that for the reagent probe cleaning tank-side vacuum tank 87 of the first embodiment can be performed for the reaction vessel-side vacuum tank 88.

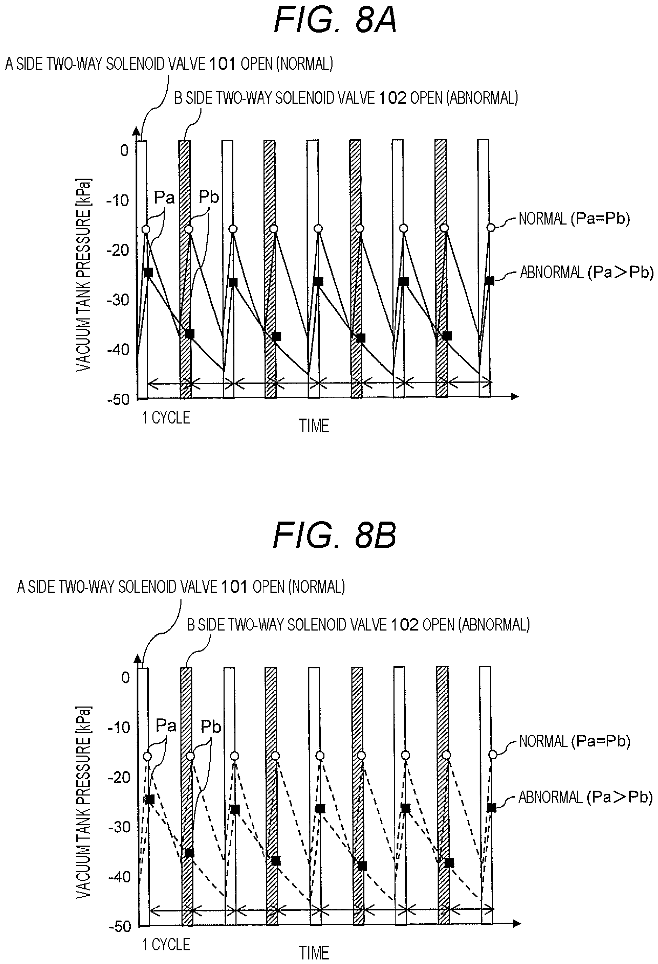

FIG. 8A illustrates pressure fluctuations of the reagent probe cleaning tank-side vacuum tank 87 in a case where an abnormality has occurred where the B-side two-way solenoid valve 102 will not open. FIG. 8B is a graph obtained by extracting the maximum value of each cycle in FIG. 8A.

As shown in FIGS. 8A and 8B, at normal times (white circles), equal pressure fluctuations are shown in all cycles, and Pa=Pb holds true, but the pressure rises and drops are different every other cycle at abnormal times (black squares), and Pa > Pb holds true. This is because the fact that the B-side two-way solenoid valve 102 will not open means that both the A-side two-way solenoid valve 101 and the B-side two-way solenoid valve 102 are closed at the timing when the B-side two-way solenoid valve 102 should open. Therefore, the reagent probe cleaning tank-side vacuum pump 54 is in a state of aspirating the reagent probe cleaning tank-side vacuum tank 87, and the pressure of the reagent probe cleaning tank-side vacuum tank 87 drops. On the other hand, at the timing when the A-side two-way solenoid valve 101 opens, the A-side two-way solenoid valve 101 opens and the B-side two-way solenoid valve 102 is closed. Therefore, at the timing when the A-side two-way solenoid valve 101 opens, the A-side reagent probe cleaning tank 31 is aspirated, and the pressure rises.

Therefore, in a case where Pa > Pb, it is possible to predict the possibility of an abnormality where the B-side two-way solenoid valve 102 will not open. Conversely, in a case where Pa < Pb, the possibility of an abnormality where the A-side two-way solenoid valve 101 will not open can be predicted. Therefore, in a case where an abnormality is detected, the user of the automatic analysis device is able to obtain more detailed information by checking the state of pressure fluctuations during cycles.

For example, in a case where it is determined that there is an abnormality in the automatic analysis device, if Pa > Pb, the determination part 103 may output information indicating that an abnormality has possibly occurred where the B-side two-way solenoid valve 102 will not open. Conversely, if Pa < Pb, the determination part 103 may output information indicating that an abnormality has possibly occurred where the A-side two-way solenoid valve 101 will not open.

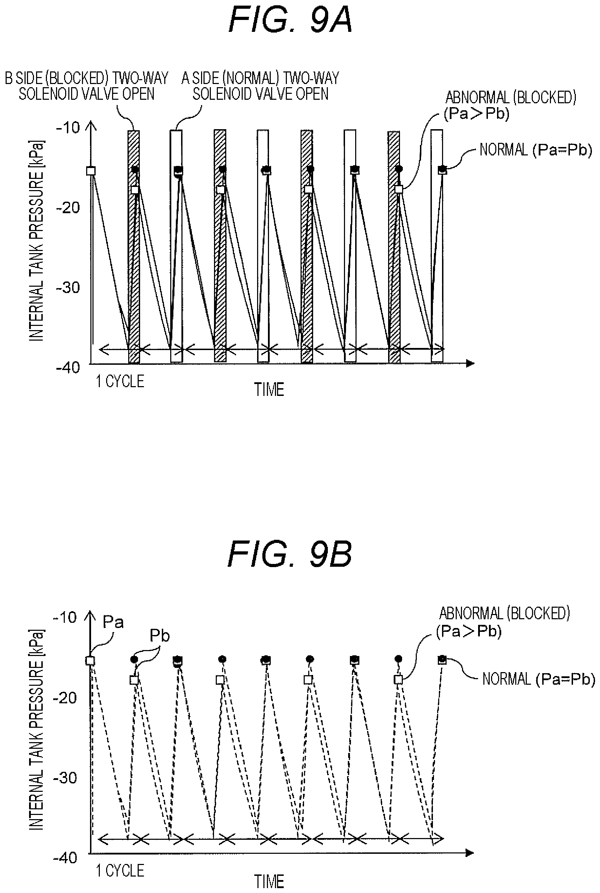

FIG. 9A shows pressure fluctuations in the reagent probe cleaning tank-side vacuum tank 87 in a case where an abnormality occurs where a part of the B-side reagent probe cleaning tank-side vacuum aspiration flow path (for example, between the B-side waste liquid bin 81 and the B-side two-way solenoid valve 102) is blocked, and FIG. 9B shows a graph obtained by extracting the maximum value of each cycle of FIG. 9A.

As shown in FIGS. 9A and 9B, at normal times, equal pressure fluctuations are shown in all cycles, and Pa = Pb holds true. At abnormal times, the rises and drops in pressure are different every other cycle, and Pa > Pb holds true. The reason for this is that if the B-side vacuum aspiration flow path is blocked, aspiration cannot be performed from the B-side vacuum aspiration flow path. Hence, the pressure rise value is reduced at the timing when the B-side two-way solenoid valve 102 opens. Therefore, in a case where Pa > Pb, it is possible to predict the possibility of an abnormality such as blockage of the B-side vacuum aspiration flow path. Therefore, in a case where an abnormality is detected, the user of the automatic analysis device is able to obtain more detailed information by checking the state of pressure fluctuations during cycles.

For example, in a case where it is determined that there is an abnormality in the automatic analysis device, if Pa > Pb, the determination part 103 may output information indicating that a blockage has possibly occurred in the B-system 36, and conversely, if Pa < Pb, may output information indicating that a blockage has possibly occurred in the A-system 35.

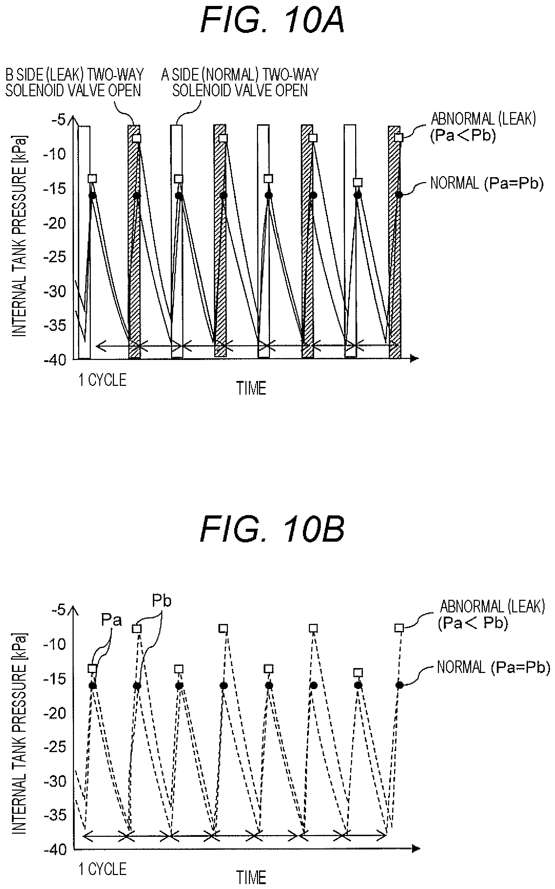

FIG. 10A shows pressure fluctuations in the reagent probe cleaning tank-side vacuum tank 87 in a case where an abnormality occurs where air has leaked from a part of the B-side reagent probe cleaning tank-side vacuum aspiration flow path (for example, between the B-side waste liquid bin 81 and the B-side two-way solenoid valve 102), and FIG. 10B shows a graph obtained by extracting the maximum value of each cycle of FIG. 10A.

As shown in FIGS. 10A and 10B, at normal times, equal pressure fluctuations are shown in all cycles, and Pa=Pb holds true, but the pressure rises and drops are different every other cycle at abnormal times, and Pa < Pb holds true. The reason for this is that air, not liquid, is aspirated from a leakage point due to a leak in the B-side vacuum aspiration flow path. Because air has a lower density than liquid, the pressure loss is small. Hence, the pressure rise value increases at the timing when the B-side two-way solenoid valve 102 opens. Therefore, if Pa < Pb, it is possible to predict the possibility of an abnormality where there is a leakage point in the B-side vacuum aspiration flow path. Therefore, in a case where an abnormality is detected, the user of the automatic analysis device is able to obtain more detailed information by checking the state of pressure fluctuations during cycles.

For example, in a case where it is determined that there is an abnormality in the automatic analysis device, if Pa < Pb, the determination part 103 may output information indicating that a leak has possibly occurred in the B-system 36, and conversely, if Pa > Pb, the determination part 103 may output information indicating that a leak has possibly occurred in the A-system 35.

### Second Embodiment

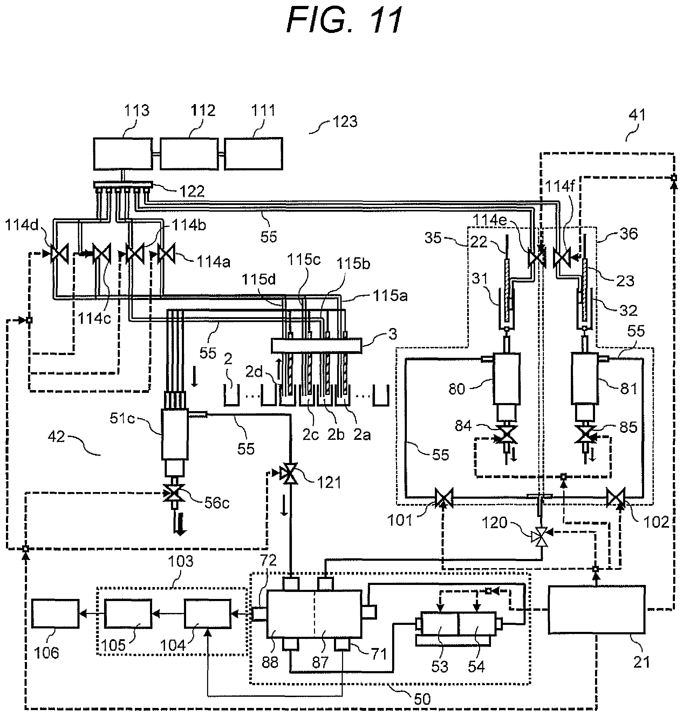

Hereinafter, a second embodiment according to the present invention will be described with reference to FIGS. 11, 12A, 12B, and 13. In FIGS. 11, 12A, 12B, and 13, the same reference numerals as those in FIGS. 1 to 10 denote the same parts, and descriptions thereof are sometimes omitted. In addition, descriptions of parts similar to those in the first embodiment may be omitted.

The automatic analysis device according to the second embodiment includes a liquid supply unit 123 in addition to the configuration of the first embodiment.

FIG. 11 is a diagram showing the reagent probe cleaning tank-side aspiration unit 41, the reaction vessel-side aspiration unit 42, and the liquid supply unit 123 of the second embodiment. The liquid supply unit 123 includes a water supply tank 111, a water supply pump 112, a gear pump 113, a branch pipe 122, a tube 55, water supply two-way solenoid valves 114a to 114f (water supply solenoid valves), and water supply probes 115a to 115d.

The water supply pump 112 is installed to supply liquid to the pipe, and the water supply tank 111 stores the liquid and supplies the liquid to the water supply pump 112. In addition, the gear pump 113 applies pressure to the inside of the pipe.

The branch pipe 122 affords pipe branching in order to individually supply liquid to the reaction vessels 2 (2a to 2d), the A-side reagent probe cleaning tank 31, and the B-side reagent probe cleaning tank 32.

The water supply two-way solenoid valves 114a, 114b, 114c, and 114d individually control the timing for supplying liquid to the reaction vessels 2a, 2b, 2c, and 2d. Further, the water supply two-way solenoid valves 114e and 114f individually control the timing for supplying liquid to the A-side reagent probe cleaning tank 31 and the B-side reagent probe cleaning tank 32. The water supply probes 115a, 115b, 115c, and 115d discharge liquid to each of the reaction vessels 2a, 2b, 2c, and 2d. The water supply two-way solenoid valves 114a to 114f are connected to the controller 21 and are operationally controlled by the controller 21.

As described above, the automatic analysis device according to the second embodiment includes the liquid supply unit 123 and the plurality of water supply two-way solenoid valves 114a to 114f. The liquid supply unit 123 includes the water supply pump 112 for supplying liquid, the water supply tank 111 for supplying liquid to the water supply pump 112, and the gear pump 113 for applying pressure to the liquid.

Each of the water supply two-way solenoid valves 114a to 114f is installed between the gear pump 113 and the reaction vessels 2, the A-side reagent probe cleaning tank 31, or the B-side reagent probe cleaning tank 32, and adjusts a supply pressure by opening and closing when the liquid supply unit 123 supplies liquid.

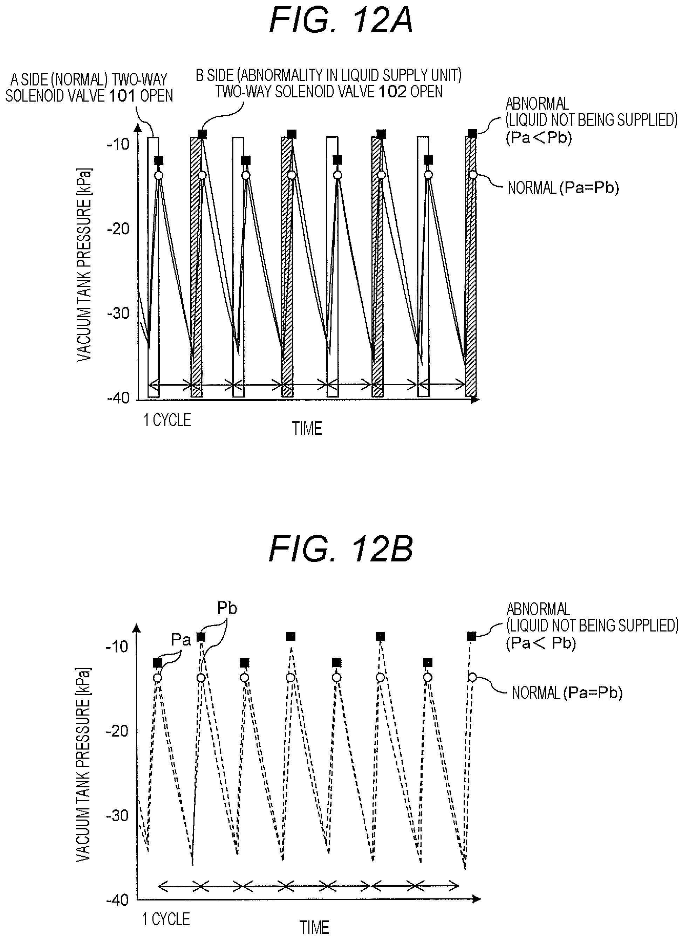

FIG. 12A shows the pressure fluctuations in the reagent probe cleaning tank-side vacuum tank 87 in a case where an abnormality occurs in the supplying of liquid to the B-side reagent probe cleaning tank 32, and FIG. 12B shows a graph obtained by extracting the maximum value of each cycle of FIG. 12A. The white sections in FIG. 12A indicate timings at which the reagent probe cleaning tank-side three-way solenoid valve 120 and the A-side two-way solenoid valve 101 are simultaneously open, and the shaded sections indicate timings at which the reagent probe cleaning tank-side three-way solenoid valve 120 and the B-side two-way solenoid valve 102 are simultaneously open.

As shown in FIGS. 12A and 12B, at normal times, equal pressure fluctuations are shown in all cycles, and Pa = Pb holds true. This is because, because the A-system 35 and the B-system 36 have the same structure, the pressure rise values in the white rectangular sections as well as the shaded rectangular sections are substantially the same as the pressure drop values in the sections other than these sections.

On the other hand, at abnormal times, the pressure rises and drops are different for each cycle, and Pa < Pb holds true. In a case where an abnormality occurs in the supplying of liquid to the B-side reagent probe cleaning tank 32, the liquid is not supplied to the B-side reagent probe cleaning tank 32. Therefore, the vacuum aspiration flow path aspirates the air present in the B-side reagent probe cleaning tank 32. As a result, the pressure loss at the time of aspirating the B-side reagent probe cleaning tank 32 is reduced. For this reason, the pressure fluctuation at the time of aspirating the B-side reagent probe cleaning tank 32 is larger than the pressure fluctuation at the time of aspirating the A-side reagent probe cleaning tank 31.

Therefore, if Pa > Pb, the possibility of an abnormality occurring in the B-side liquid supply channel can be predicted.

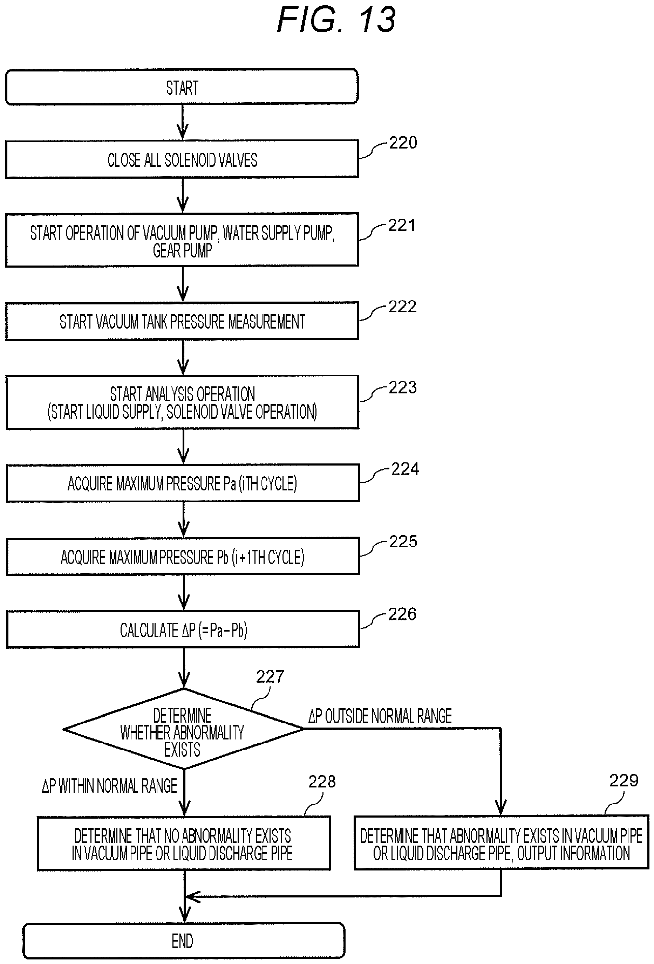

FIG. 13 is a chart of abnormality detection of the reagent probe cleaning tank-side aspiration unit 41 and the liquid supply unit 123. As shown in FIG. 13, first, the controller 21 closes all of the reagent probe cleaning tank-side three-way solenoid valve 120, the A-side two-way solenoid valve 101, the B-side two-way solenoid valve 102, and the water supply two-way solenoid valves 114a to 114f (220) .

Next, the controller 21 starts the operation of the reagent probe cleaning tank-side vacuum pump 54, the water supply pump 112, and the gear pump 113. Because all the solenoid valves are closed, the pressure in the reagent probe cleaning tank-side vacuum tank 87 drops to a constant value (221).

Subsequently, the controller 21 starts measurement of the pressure in the reagent probe cleaning tank-side vacuum tank 87 (222).

Thereafter, the controller 21 starts an analysis operation (223). For example, the controller 21 controls the opening and closing of the A-side two-way solenoid valve 101 and the B-side two-way solenoid valve 102, and the water supply two-way solenoid valves 114a to 114f. Accordingly, a cycle that includes the supplying of liquid to the reaction vessels 2, the A-side reagent probe cleaning tank 31, and the B-side reagent probe cleaning tank 32 and a vacuum aspiration operation is started. The pressure at this time changes, for example, as shown in FIG. 12A.

In the i-th cycle (where i is the number of the cycle), the determination part 103 acquires the maximum value Pa of the pressure measurement value in the cycle wherein the A-side two-way solenoid valve 101 opens (224). Subsequently, the determination part 103 acquires the maximum value Pb of the pressure measurement value in the cycle (that is, the (i+1)th cycle) wherein the B-side two-way solenoid valve 102 opens (225).

The determination part 103 calculates ΔP=Pa-Pb (226), and determines the presence or absence of an abnormality (227) .

If ΔP falls within a preset normal value range, the determination part 103 determines that "there is no abnormality in the automatic analysis device" (228). For example, it is determined that there is no abnormality in the A-system 35, the B-system 36, and the reagent probe cleaning tank-side aspiration unit 41. On the other hand, if ΔP is outside the normal value range, the determination part 103 determines that "there is an abnormality in the automatic analysis device" (229). For example, it is determined that there is an abnormality in the A-system 35, the B-system 36, or the reagent probe cleaning tank-side aspiration unit 41.

For example, in a case where it is determined that there is an abnormality in the automatic analysis device, if Pa < Pb, the determination part 103 may output information indicating that an abnormality has possibly occurred in the liquid supply flow path of the B-system 36, and conversely, if Pa > Pb, may output information indicating that an abnormality has possibly occurred in the liquid supply flow path of the A-system 35.

In the present embodiment, a liquid supply unit 123 is provided in addition to the first embodiment. In the first embodiment, only an abnormality of the A-system 35 or the B-system 36 was detected. The present embodiment affords the advantage that an abnormality of the liquid supply unit 123 can also be detected based on the pressure measurement value of the reagent probe cleaning tank-side vacuum tank 87.

### Third Embodiment

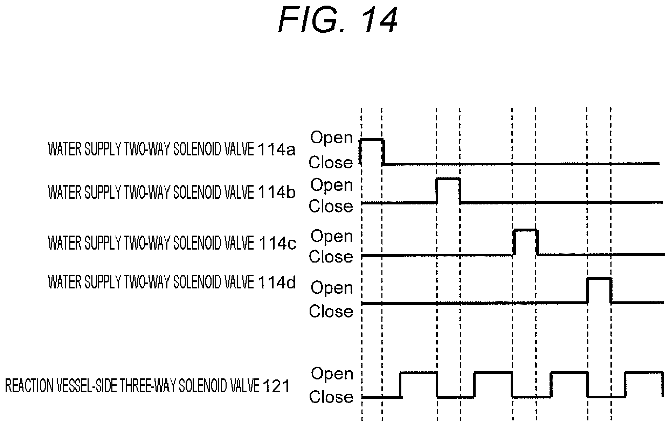

Next, a third embodiment according to the present invention will be described with reference to FIGS. 14, 15A, 15B, 16A, 16B, and 17. Note that, in FIGS. 14, 15A, 15B, 16A, 16B, and 17, the same reference numerals as those in FIGS. 1 to 13 denote the same parts, and repeated descriptions thereof are omitted. The third embodiment differs from the second embodiment in that a liquid supply abnormality on the reaction vessel-side in the liquid supply unit 123 according to the second embodiment is detected. Hereinafter, descriptions of parts similar to those of the second embodiment are sometimes omitted.

FIG. 14 shows opening and closing operations of the water supply two-way solenoid valves 114a to 114d and the reaction vessel-side three-way solenoid valve 121.

First, the water supply two-way solenoid valve 114a opens to supply water to the reaction vessel 2a. After the water supply to the reaction vessel 2a is finished, the water supply two-way solenoid valve 114a is closed. Next, the reaction vessel-side three-way solenoid valve 121 opens to aspirate water in the reaction vessel 2a. After the reaction vessel-side three-way solenoid valve 121 is closed, the water supply two-way solenoid valve 114b opens to supply water to the reaction vessel 2b. After the water supply to the reaction vessel 2b is finished, the water supply two-way solenoid valve 114b is closed. Next, the reaction vessel-side three-way solenoid valve 121 opens to aspirate water in the reaction vessel 2b. The same operation is also performed on the reaction vessel 2c and the reaction vessel 2d.

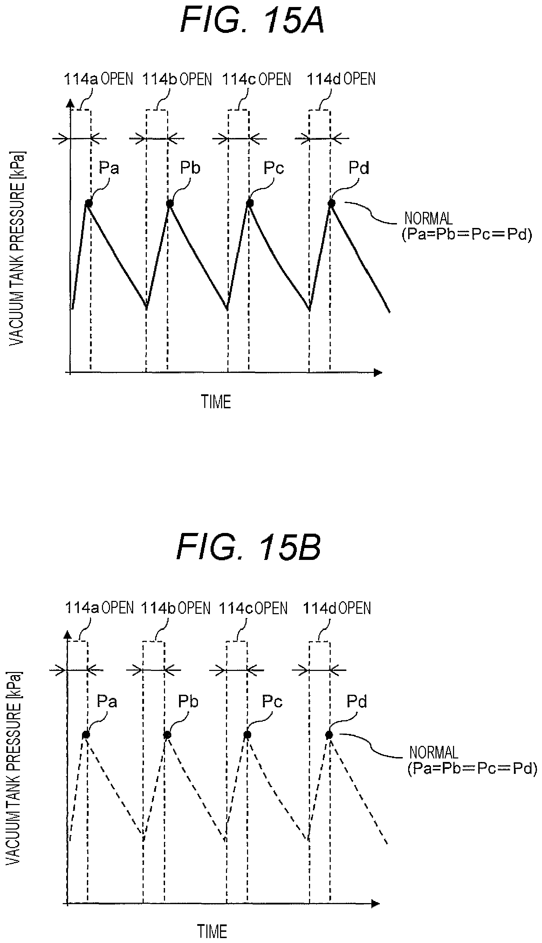

FIG. 15A shows the pressure fluctuations in the reaction vessel-side vacuum tank 88 in a case where the solenoid valve operation shown in FIG. 14 is performed, the water supply to the reaction vessels 2 is performed normally without an abnormality in the reaction vessel-side water supply flow path, and the cleaning solution aspiration in the reaction vessels 2 is performed normally.

In FIG. 15A, sections in which the reaction vessel-side three-way solenoid valve 121 is opened to aspirate the liquid in the reaction vessels 2 are indicated by broken lines.

As shown in FIG. 15A, the pressure rises and reaches the maximum value in the broken-line sections, and the pressure drops and reaches a minimum value in sections other than the broken-line sections. The reason for this is that the reaction vessel-side three-way solenoid valve 121 is closed except for in the broken-line sections, and the reaction vessels 2 and the reaction vessel-side vacuum tank 88 do not communicate with each other. At this time, because the reaction vessel-side vacuum pump 53 aspirates the reaction vessel-side vacuum tank 88, the pressure of the reaction vessel-side vacuum tank 88 drops. Therefore, the pressure is minimized at the times of the end of the sections in which the reaction vessel-side three-way solenoid valve 121 is closed (that is, at the start of the broken line-sections).

In the broken-line sections, the reaction vessel-side three-way solenoid valve 121 is open, and the reaction vessels 2 and the reaction vessel-side vacuum tank 88 communicate with each other. In this state, fluid flows from the reaction vessels 2 at a higher pressure than the reaction vessel-side vacuum tank 88 to a reaction vessel-side vacuum tank 88 at a lower pressure. Due to this phenomenon, while the reaction vessel-side three-way solenoid valve 121 is open, the pressure in the reaction vessel-side vacuum tank 88 rises. Therefore, the pressure is maximized at the times of the end of the sections (broken-line sections) when the reaction vessel-side three-way solenoid valve 121 is open.

FIG. 15B is a graph obtained by extracting the maximum values of each cycle in FIG. 15A. As shown in FIG. 15B, the maximum pressure of the reaction vessel-side vacuum tank 88 indicates substantially the same value for each cycle.

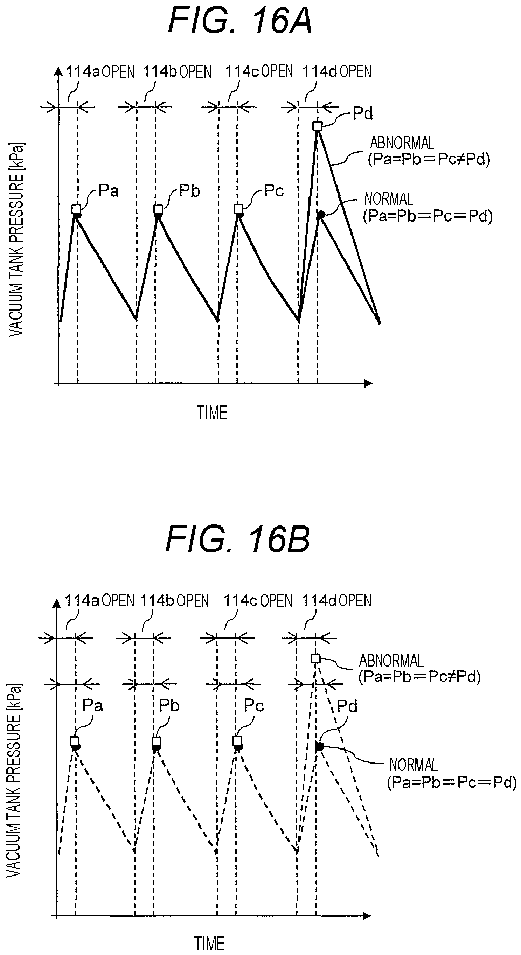

FIG. 16A shows the pressure fluctuations in the reaction vessel-side vacuum tank 88 in a case where the solenoid valve operation shown in FIG. 14 is performed and there is an abnormality in the water supply flow path of the reaction vessel 2d. In addition, FIG. 16B illustrates a graph obtained by extracting the maximum values of each cycle of FIG. 16A.

As shown in FIG. 16A, at normal times, equal pressure fluctuations are shown in all cycles, and when the maximum values of pressure measurement values in cycles in which the water supply two-way solenoid valves 114a, 114b, 114c, and 114d are open are Pa, Pb, Pc, and Pd, respectively, Pa = Pb = Pc = Pd.

On the other hand, this relationship may not hold at abnormal times. For example, when an abnormality occurs in the supplying of liquid to the reaction vessel 2d, the pressure rise and drop of the reaction vessel 2d are different, and as shown in FIG. 16B, Pa = Pb = Pc < Pd. The reason for this is that in a case where an abnormality occurs in the supplying of liquid to the reaction vessel 2d, the liquid is not supplied to the reaction vessel 2d and air is aspirated without the liquid being aspirated, and hence the pressure loss at the time of aspirating the reaction vessel 2d is reduced. Therefore, the pressure fluctuation at the time of aspirating the reaction vessel 2d is larger than the pressure fluctuation at the time of aspirating the reaction vessels 2a, 2b, and 2c.

Therefore, in a case where Pa = Pb = Pc < Pd, it is possible to predict an abnormality where the supplying of liquid by the liquid supply unit 123 to the reaction vessel 2d is not performed.

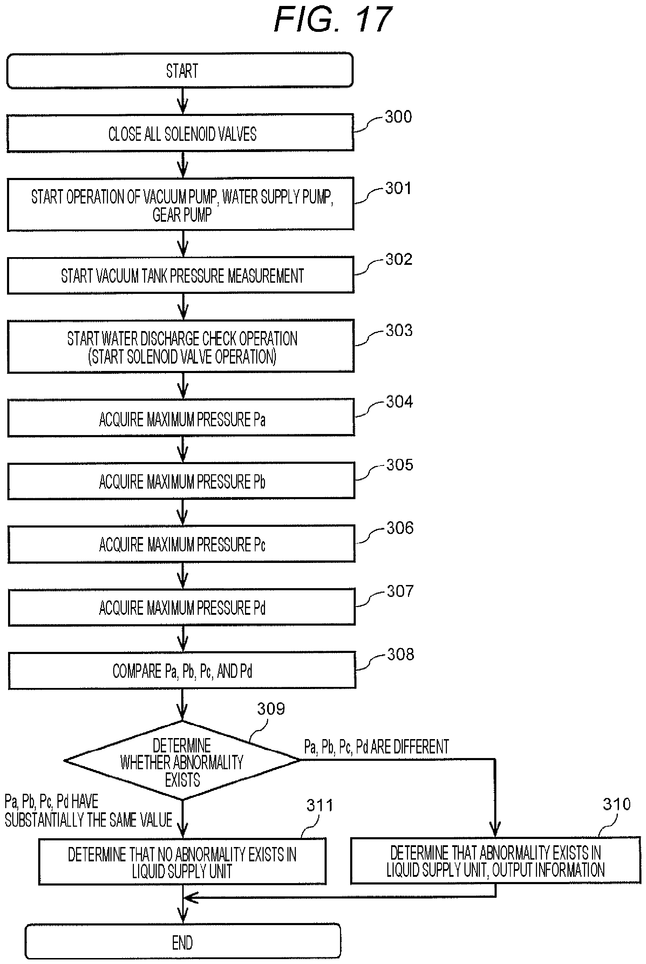

FIG. 17 is a chart of abnormality detection of the reaction vessel-side aspiration unit 42. First, the controller 21 closes the reaction vessel-side three-way solenoid valve 121 (300).

Next, the controller 21 starts the operation of the reaction vessel-side vacuum pump 53. At this time, because the reaction vessel-side three-way solenoid valve 121 is closed, the pressure in the reaction vessel-side vacuum tank 88 drops to a constant value (301).

Subsequently, the controller 21 starts measurement of the pressure in the reaction vessel-side vacuum tank 88 (302) .

Thereafter, the controller 21 starts a water discharge check operation (303). For example, the controller 21 controls the opening and closing of the water supply two-way solenoid valves 114a to 114d. Accordingly, a cycle that includes the supplying of liquid to the reaction vessels 2a to 2d and a vacuum aspiration operation is started. The pressure at this time changes as shown in FIG. 15A or FIG. 16A, for example.

In the i-th cycle (where i is the number of the cycle), the determination part 103 acquires the maximum value Pa of the pressure measurement value in the cycle wherein the water supply two-way solenoid valve 114a opens (304). Next, the determination part 103 acquires the maximum value Pb of the pressure measurement value in the cycle (that is, the (i+1)th cycle) wherein the water supply two-way solenoid valve 114b opens (305). Next, the determination part 103 acquires the maximum value Pc of the pressure measurement value in the cycle (that is, the (i+2)th cycle) wherein the water supply two-way solenoid valve 114c opens (306). Next, the determination part 103 acquires the maximum value Pd of the pressure measurement value in the cycle (that is, the (i+3)th cycle) wherein the water supply two-way solenoid valve 114d opens (307).

The determination part 103 compares Pa, Pb, Pc, and Pd (308), and determines the presence or absence of an abnormality (309).

If all of Pa, Pb, Pc, and Pd have the same value or substantially the same value, the determination part 103 determines that "there is no abnormality in the liquid supply unit" (311). More specifically, it may be determined that there is no abnormality in the water discharge flow path. On the other hand, if one of Pa, Pb, Pc, and Pd is a value different from the others or a value substantially different from the others, it is determined that "there is an abnormality in the liquid supply unit" (310). More specifically, it may be determined that there is no abnormality in the water discharge flow path.

Specific determination criteria can be appropriately designed by those skilled in the art. For example, a maximum value and a minimum value among Pa, Pb, Pc, and Pd may be specified, and it may be determined that there is no abnormality if the difference therebetween is equal to or less than a predetermined threshold value, and it may otherwise be determined that there is an abnormality.

In a case where an abnormality of the liquid supply unit 123 is detected (310), the determination part 103 outputs information indicating that there is an abnormality in the liquid supply unit. For example, the determination part 103 outputs information indicating that an abnormality has possibly occurred due to an opening/closing failure of the water supply two-way solenoid valves 114a to 114d, a reduction in the inner diameter of a pipe in the liquid supply unit 123, or cracking of the pipe in the liquid supply unit 123. The form of output can be arbitrarily designed, and is realized, for example, by displaying in a display device and/or storing in a storage medium. By outputting the information, the user of the automatic analysis device can be made aware of the possibility of an abnormality occurring.

For example, in a case where an abnormality of the liquid supply unit 123 is detected, the determination part 103 may output information indicating that an abnormality has possibly occurred where liquid is not being supplied in the path pertaining to the water supply two-way solenoid valve which has the largest maximum pressure value among the water supply two-way solenoid valves 114a to 114d.

As described above, the automatic analysis device sequentially operates the water supply two-way solenoid valves 114a to 114d to supply liquid, and detects an abnormality of the liquid supply unit 123 based on fluctuations in the pressure measurement value of the reaction vessel-side vacuum tank 88 when the liquid is aspirated. In this manner, an abnormality in the liquid supply system can be detected.

In the present embodiment, the determination part 103 detects an abnormality in the automatic analysis device (for example, the liquid supply unit 123) based on the pressure measurement values Pa, Pb, Pc, and Pd in each cycle. That is, an abnormality is determined based on the pressure values of the same pump on the same day. Thus, by detecting an abnormality based on pressure measurement values of consecutive cycles, it is possible to eliminate day-to-day differences and individual differences in pumps, and it is possible to detect an abnormality without a reduction in accuracy.

Note that factors affecting vacuum pump performance such as atmospheric pressure and temperature may be measured using a barometer, a thermometer, or the like, and day-to-day differences in the vacuum pump may be excluded from the measured values. In addition, individual differences between vacuum pumps may be grasped in advance, and thus the individual differences between vacuum pumps may be eliminated.

Furthermore, in the present embodiment, an abnormality is detected from a pressure measurement value (for example, a maximum value) at a specific time in each cycle. That is, an abnormality can be detected by acquiring the pressure measurement data at least once per cycle. Therefore, an abnormality can be detected with a small data volume.

The pressure may be measured only by the reaction vessel-side pressure sensor 72. That is, it is not necessary to install a pressure sensor for each system, and it is thus possible to miniaturize the device and reduce the cost thereof.

In this embodiment, the determination part 103 detects an abnormality in the automatic analysis device by comparing the pressure measurement values at times when the pressure in the reaction vessel-side vacuum tank 88 is maximum. As a modification, the determination part 103 may detect an abnormality of the automatic analysis device by comparing pressure measurement values at times when the pressure of the reaction vessel-side vacuum tank 88 is minimum. When the maximum value or the minimum value is used, even if a slight temporal shift occurs in the cycle, the detection accuracy is not affected.

In another modification, the determination part 103 may detect an abnormality of the automatic analysis device by comparing pressure measurement values at a predetermined time during the operation cycles of the water supply two-way solenoid valves 114a to 114d. For example, as per the modification of the first embodiment, a pressure measurement value at the time t (FIG. 5A) in each cycle may be used. When the measured value at the predetermined time is used, an abnormality can be detected in a case where a temporal shift occurs in the cycle.

In the present embodiment, the processing ends after step 310 or 311, but as a modification, the processing may be returned to step 304 after step 310 or 311. In this way, the determination is continuously performed in each cycle.

Note that the present invention is not limited to or by the above-described embodiments and includes various modifications. For example, the above-described embodiments have been described in detail to facilitate understanding of the present invention, and the present invention is not necessarily limited to or by embodiments having all the configurations described. In addition, it is also possible to add part of a configuration of a certain embodiment to the configuration of another embodiment. Moreover, it is possible to add other configurations to part of the configuration of each embodiment, and to delete or replace part of the configuration of the embodiments.

### Reference Signs List

2(2a to 2d) reaction vessel
21 controller (control part)
31 A-side reagent probe cleaning tank (cleaning tank)
32 B-side reagent probe cleaning tank (cleaning tank)
35 A-system (aspiration system)
36 B-system (aspiration system)
41 reagent probe cleaning tank-side aspiration unit (first aspiration unit)
42 reaction vessel-side aspiration unit (second aspiration unit)
53 reaction vessel-side vacuum pump (second vacuum pump)
54 reagent probe cleaning tank-side vacuum pump (first vacuum pump)
71 reagent probe cleaning tank-side pressure sensor (first pressure sensor)
72 reaction vessel-side pressure sensor (second pressure sensor)
80 A-side waste liquid bin (first vacuum bin)
81 B-side waste liquid bin (first vacuum bin)
83 reaction vessel-side waste liquid bin (second vacuum bin)
87 reagent probe cleaning tank-side vacuum tank (first vacuum tank)
88 reaction vessel-side vacuum tank (second vacuum tank)
101 A-side two-way solenoid valve (first aspiration solenoid valve)
102 B-side two-way solenoid valve (first aspiration solenoid valve)
103 determination part
111 water supply tank
112 water supply pump
113 gear pump
121 reaction vessel-side three-way solenoid valve (second aspiration solenoid valve)
123 liquid supply unit
114 (114a to 114f) water supply two-way solenoid valve (water supply solenoid valve)
Pa to Pd pressure measurement value
TH1 threshold value (first threshold value)
TH2 threshold value (second threshold value)

All publications, patents, and patent applications cited in the present specification are hereby incorporated herein by reference in their entirety.

## Claims

1. An automatic analysis device, comprising:
a first vacuum pump;
a first vacuum tank connected to the first vacuum pump;
a first pressure sensor installed in the first vacuum tank;
a first vacuum bin connected to the first vacuum tank;
a plurality of first aspiration solenoid valves;
a control part; and
a determination part,
wherein
the first vacuum tank aspirates liquid in a plurality of reaction vessels or cleaning tanks, the reaction vessels or the cleaning tanks each containing liquid,
the plurality of first aspiration solenoid valves are all installed between the first vacuum tank and the first vacuum bin, and are opened and closed to adjust an aspiration pressure when the first vacuum tank aspirates liquid,
the control part controls the opening and closing of each of the first aspiration solenoid valves,
the automatic analysis device includes a plurality of independent aspiration systems,
each of the aspiration systems individually includes the first aspiration solenoid valve such that aspiration states are individually controlled, and
the determination part detects an abnormality of the automatic analysis device by comparing pressure measurement values in the aspiration that pertain to the respective aspiration systems, based on pressure measurement values of the first vacuum tank which are measured by the first pressure sensor.

2. The automatic analysis device according to claim 1, wherein a difference in fluctuation ranges of the pressure measurement values due to operation of the first aspiration solenoid valves in the respective aspiration systems is equal to or less than a first threshold value at a normal time.

3. The automatic analysis device according to claim 1, wherein the determination part detects an abnormality based on the pressure measurement value during an analysis operation by the automatic analysis device.

4. The automatic analysis device according to claim 1, wherein
the automatic analysis device further comprises:
a second vacuum pump,
a second vacuum tank connected to the second vacuum pump,
a second pressure sensor installed in the second vacuum tank,
a second vacuum bin connected to the second vacuum tank, and
a second aspiration solenoid valve, and
the determination part individually detects an abnormality in the automatic analysis device in relation to the first vacuum tank and the second vacuum tank.

5. The automatic analysis device according to claim 1, wherein the determination part detects an abnormality in the automatic analysis device by comparing the pressure measurement values at a time when the pressure in the first vacuum tank is maximum or minimum.

6. The automatic analysis device according to claim 1, wherein the determination part detects an abnormality of the automatic analysis device by comparing the pressure measurement values at a predetermined time during operation cycles of the first aspiration solenoid valves.

7. The automatic analysis device according to claim 1, wherein, in a case where the determination part detects an abnormality in the automatic analysis device, the determination part outputs information indicating that an abnormality has possibly occurred due to an opening/closing failure of the first aspiration solenoid valve, a reduction in the inner diameter of a pipe, or cracking of the pipe.

8. The automatic analysis device according to claim 1, wherein
the automatic analysis device further comprises a liquid supply unit and a plurality of water supply solenoid valves,
the liquid supply unit includes:
a water supply pump for supplying liquid,
a water supply tank for supplying liquid to the water supply pump, and
a gear pump for applying pressure to the liquid,
each of the plurality of water supply solenoid valves is installed between the gear pump and the reaction vessels or the cleaning tanks, and adjusts a supply pressure by opening and closing when the liquid supply unit supplies liquid, and
the determination part detects an abnormality of the liquid supply unit based on the pressure measurement value.

9. The automatic analysis device according to claim 8, wherein the automatic analysis device sequentially operates the plurality of water supply solenoid valves to supply liquid, and detects an abnormality of the liquid supply unit based on fluctuations in the pressure measurement values when the liquid is aspirated.

10. The automatic analysis device according to claim 1, wherein, in a case where an abnormality of the automatic analysis device is detected, the determination part outputs information indicating that an abnormality has possibly occurred in any of the aspiration systems.

11. The automatic analysis device according to claim 1, wherein the determination part determines that an abnormality of the automatic analysis device is detected in a case where a difference in fluctuation ranges of the pressure measurement values due to operation of the first aspiration solenoid valves in the respective aspiration systems exceeds a second threshold value.
